# EUROPÄISCHE PATENTANMELDUNG

(11) **EP 1 894 775 A1**
(43) Veröffentlichungstag der Anmeldung: **05.03.2008**
(21) Anmeldenummer: 07010013.6
(22) Anmeldetag: 19.05.2007
(51) Int. Cl.: B60P 7/08, B65D 25/14, B65D 25/20

(54) **Doppelt rutschhemmendes Behältnis**

(30) Priorität: 02.09.2006 DE 202006013505 U
(71) Anmelder: Richter, Harald, 75331 Engelsbrand (DE)
(72) Erfinder: Richter, Harald, 75331 Engelsbrand (DE)
(74) Vertreter: Gallo, Wolfgang

(57) **Zusammenfassung**

Rutschhemmender Behälter, der eine Bodenwand (1) und Seitenwände (2) aufweist, wobei mindestens die Bodenwand (1) sowohl an ihrer Innenseite wie auch an ihrer Außenseite mit einem rutschhemmenden Belag (3, 4) überdeckt ist.

## Beschreibung

Die Erfindung betrifft ein Behältnis zur verrutschsicheren Aufbewahrung von Gegenständen insbesondere in Autos, wo in Folge von Beschleunigungs- und Bremsvorgängen sowie Kurvenfahrten häufig Beschleunigungen in wechselnden Richtungen auf die Gegenstände einwirken und diese auch in Kisten oder in Ablageflächen unkontrolliert herumrutschen.

Aufgabe der Erfindung ist es, diesem Problem durch ein Behältnis Abhilfe zu schaffen, das ein unerwünschtes Verrutschen von Gegenständen zuverlässig verhindert.

Diese Aufgabe wird gemäß durch den im Anspruch 1 angegebenen Behälter gelöst. Vorteilhafte Ausgestaltungen der Erfindung sind Gegenstand der Unteransprüche.

Der Behälter nach der Erfindung ist "doppelt" rutschhemmend ausgebildet, nämlich sowohl innen als auch außen. Dabei ist mindestens der Boden sowohl an seiner Unterseite oder Außenseite als auch seiner Oberseite oder Innenseite rutschhemmend ausgebildet. Die rutschhemmende Ausbildung kann vorzugsweise durch Ausbildung oder Überziehen der Innenfläche und der Außenfläche mit einer rippen- oder noppenartigen Struktur aus weichem reib- oder haftintensivem Material wie Schaumkunststoff, Schaumgummi oder Latexschaum hergestellt sein. Insbesondere an der Innenseite des Behälters können vorzugsweise auch die Seitenwände in dieser Art und Weise rutschhemmend ausgebildet sein, so daß ein an einer Seitenwand anliegender Gegenstand auch dort einen Widerstand gegen Verrutschen erfährt.

Der erfindungsgemäße Behälter kann als Schale, als Wanne, oder als Kasten ausgebildet sein. Aufgrund dieser Ausbildung ist der Behälter selbst gegen Herumrutschen gesichert, und auch sein Inhalt ist rutschgesichert, so daß ein darin abgelegter Gegenstand aufgrund seitlicher Beschleunigungen weder im Behälter herumrutscht noch samt dem Behälter im Kofferraum, auf der Ladefläche oder in einem Ablagefach herumrutscht, und auch bei mehreren im Behälter abgelegten Gegenständen diese nicht durcheinander rutschen.

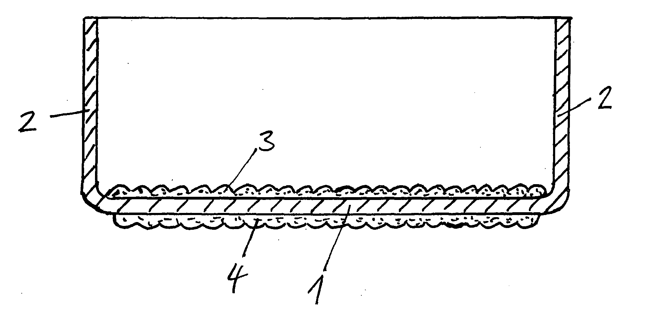

Ein Ausführungsbeispiel der Erfindung wird nachstehend unter Bezugnahme auf die anliegende Zeichnung mehr im einzelnen beschrieben. Die Zeichnung zeigt einen Schnitt durch einen Behälter nach der Erfindung.

Der Behälter besteht, wie aus der Zeichnung ersichtlich ist, aus einer Bodenwand 1 und Seitenwänden 2. Die Bodenwand 1 ist an ihrer Innenseite mit einem rutschhemmenden Belag 3 aus einem Weichgummimaterial mit noppenförmiger Struktur oder einem anderen geeigneten Material überzogen. Ebenso ist die Unterseite der Bodenwand 1 mit einem rutschhemmenden Belag 4 aus einem Weichgummimaterial mit noppenartiger Struktur oder aus einem anderen geeigneten Material überzogen.

Insbesondere an der Innenwand des Behälters können auch die Seitenwände mit einem derartigen rutschhemmenden Belag (nicht dargestellt) versehen sein. Das ist besonders dann sinnvoll, wenn es sich um größere Behälter wie beispielsweise Kisten oder Wannen für in den Kofferraum oder auf die Ladefläche eines Fahrzeugs handelt.

Die rutschhemmenden Beläge können auf die betreffende Innen- bzw. Außenwandfläche des Behälters, hier der Bodenwand 1, aufgeklebt oder in sonstiger geeigneter Weise damit verbunden sein.

## Patentansprüche

1. Rutschhemmender Behälter, der eine Bodenwand (1) und Seitenwände (2) aufweist,
wobei mindestens die Bodenwand (1) sowohl an ihrer Innenseite wie auch an ihrer Außenseite mit einem rutschhemmenden Belag (3, 4) überdeckt ist.

2. Behälter nach Anspruch 1, wobei mindestens eine Seitenwand (2) an ihrer Innenseite und/oder ihrer Außenseite mit einem rutschhemmenden Belag versehen ist.

3. Behälter nach Anspruch 1 oder 2, wobei der rutschhemmende Belag aus einem weichen Kunststoff, einem Latex- oder Latexschaummaterial, einem Gummi- oder gummiartigem Material, einem Schaum- oder Moosgummimaterial oder einem Schaumkunststoffmaterial besteht.

4. Behälter nach Anspruch 3, wobei der rutschhemmende Belag eine Noppen- oder Rippenstruktur hat.

5. Behälter nach einem der Ansprüche 1 bis 4, wobei der rutschhemmende Belag (3, 4) an der jeweiligen Fläche angeklebt oder aufgeschweißt ist.

6. Behälter nach einem der Ansprüche 1 bis 5, wobei der Behälter als Schale, Wanne oder Kasten ausgebildet ist.
